# EUROPEAN PATENT SPECIFICATION

(11) **EP 0 683 316 B1**
(45) Date of publication and mention of the grant of the patent: **24.09.1997**
(21) Application number: 95830185.5
(22) Date of filing: 05.05.1995
(51) Int. Cl.: F03D 5/06, F03D 5/04, F03B 17/06

(54) **Device for exploiting wind power**
Windnutzungsanlage
Dispositif d'exploitation de l'énergie du vent

(30) Priority: 10.05.1994 IT MI940924
(43) Date of publication of application: 22.11.1995
(73) Proprietor: WECO - Wind Engines Company - S.r.l., Vasto Marina (Chieti) (IT)
(72) Inventor: Comastri, Mauro, Milano (IT)
(74) Representative: Adorno, Silvano

(56) References cited:
- WO-A-81/01867
- WO-A-94/21913
- GB-A- 2 131 489
- US-A- 1 518 022
- US-A- 3 995 972
- PROCEEDINGS OF THE 35TH MIDWEST SYMPOSIUM ON CIRCUITS AND SYSTEMS, vol. 2, 9 August 1992 WASHINGTON DC USA, pages 1446-1449, Y.TANG 'Stator field oriented control of doubly excited induction machine in wind power generating system.'

## Description

The present invention relates to devices for exploiting wind power, and in particular to a device suitable to exploit low-speed winds.

It is known that conventional devices consist in an impeller provided with one or more blades, rotatably mounted on a tower so as to be oriented according to the direction of the wind. The blades are twisted in order to make up for the change of angle of attack along the radial direction, caused by the combination of the wind velocity with the impeller revolution velocity. Therefore, it is clear that only a short length of the blade achieves optimum conditions of angle of attack, whereas the rest of the blade operates at non-optimum angles of attack.

This results apparent by considering the Betz power coefficient (C_{P}) which is the ratio of the power P actually available at the impeller shaft to the theoretical power flowing through the impeller area S. This power coefficient changes along the blade radius r, since it depends on the ratio of the tangential velocity to the impinging wind (λ=ω*r/v, ω is the revolution velocity and v is the impinging wind velocity), on the lift and drag coefficients of the various blade sections, and on the decrease of the speed of the impinging wind across each section. Therefore, it is apparent that the power coefficient can not be optimized along the whole blade so as to maximize the collecting of wind power.

Furthermore, this kind of device requires the building of rather large structures, since the impeller diameter usually ranges from 10 to 40 m. In particular, the exploitation of low- and medium-speed winds requires large-diameter impellers with subsequent enhancement of the problems caused by the high twist required. A further drawback of the larger impellers stems from the fact that the speed at the blade tip is quite high, thus causing a loud noise while revolving.

A more practical and efficient type of reciprocating wind-exploiting device is disclosed in US patent n.3.995.972 on which the preamble of claim 1 is based. In this second type of device the motion of the members picking up the wind power is translational rather than rotational, thus allowing the use of untwisted members wherein all the sections operate at the same angle of attack. In this way, it is possible to optimize the power coefficient along the whole member and thus increase the device efficiency.

Other advantages of this type of device are that it does not require large supporting structures, that high-lift mechanisms can be applied to the picking members, and the absence of the continuous noise generated by the blade tips reaching high speeds which occurs in the conventional devices. Obviously, this type of device can be easily adapted to water use for exploiting even low-speed hydraulic flows.

One critical element of this "translational" device is the mechanism employed to provide a work output from the movement of the power-picking members. Different solutions have been adopted in this respect, from a conventional rigid shaft such as in the above-mentioned patent US 3.995.972 and in WO 94/21913, to the magnets/coils pairs disclosed in WO 81/01867, to the jaws gripping a cable as disclosed in US 1.518.022. Clearly, the efficiency of the device depends also on the effectiveness of this mechanism which must not adversely affect the movement of the power-picking members. This is particularly important at the beginning of the stroke, after the inversion in the direction of motion, when the moving member needs to build up speed quickly.

All of the above-cited mechanisms provide a substantially constant coupling between the moving members and the power-receiving apparatus, which is not desirable when the moving member is travelling at low speed as explained above.

Therefore, the object of the present invention is to provide a device for exploiting wind power which avoids the above-mentioned drawback.

This object is achieved by means of a device having the characteristics cited in claim 1.

These and other advantages and characteristics of the device according to the present invention will be apparent to those skilled in the art from the following detailed description of a preferred embodiment thereof referring to the annexed drawings wherein:
Fig. 1 is a schematic, partially see-through, front view of a device according to the invention;
Fig. 2 is a scheme of the mechanism for driving the power transfer belt;
Fig. 3 is a top plan scheme showing the motion of the device as a whole;
Fig.4 is a partially sectional view of the detail of the ground anchor of the device;
Fig.5 is a schematic, partially see-through, side view of the device;
Fig.6 is an enlarged partial cross-section along line A-A of fig.1; and
Fig.7 is a block diagram of the adjustment system of the device.

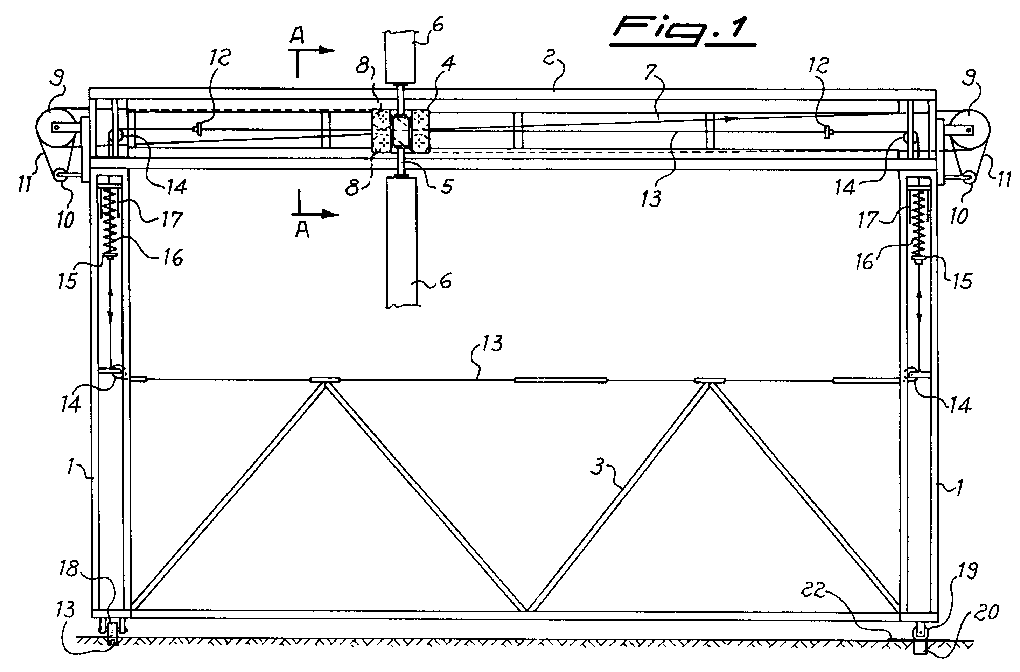

Referring to fig.1, there are shown first the essential members making up the device according to the present invention. Said device includes a portal made up of a pair of uprights 1 supporting a crossbeam 2 and also mutually connected by bracing rods 3 which make the whole structure stiffer and more solid. Guides are formed in the crossbeam 2, as it will be made clear further on, for a sliding carriage 4 bearing a vertical rod 5 on which a pair of wings 6 is keyed, one above and one below crossbeam 2, said wings being the members which pick up the wind power. The device is depicted with wings 6 at zero angle of attack and the leading edge directed towards the wind coming from a direction orthogonal to the portal, as it will be explained further on. Obviously, wings 6 will be inclined during the operations, so that the wind action generates a transverse push thereon which is transferred to carriage 4 through rod 5.

Carriage 4, while travelling along crossbeam 2, drags along a driving belt 7 which is engaged by four driving pulleys 8 arranged at the corners of a rectangle on carriage 4. Belt 7 moves between two end pulleys 9, each of which transfers the rotational motion received by belt 7 to an underlying electric generator 10 through a relevant belt 11 moved by another pulley 9' (fig.5) keyed onto the same shaft of pulley 9.

The stroke of carriage 4 is limited by a pair of stop plates 12 secured onto a loop-cable 13 sliding on four pulleys 14 arranged at the corners of a rectangle, the upper pair being located at the ends of crossbeam 2 and the lower pair about at mid-height of uprights 1. Cable 13 runs at the top through carriage 4, and at the bottom inside the horizontal rod 3 of the wind-bracing. Inside upright 1, at each vertical length of cable 13, there is secured a further plate 15 for hooking a vertical spring 16 which is fixed at the opposite end to a relevant guide 17 integral with the portal structure.

The combination of the above-cited members allows to absorb and return almost completely, but for the losses due to friction, the kinetic energy possessed by the carriage/wings assembly when it reaches the end of the stroke at an end of crossbeam 2. In fact, carriage 4 hits the stop plate 12 integral with cable 13 which slides on pulleys 14 and thus drags along plates 15. In this way, the kinetic energy is turned into elastic energy by the deformation of springs 16, of which the one at the end where carriage 4 stops will be set in traction by the corresponding plate 15, whereas the opposite one will be set in compression. Once the kinetic energy of the carriage/wings assembly has been discharged and said assembly has stopped, springs 16 return the absorbed energy by going back to their starting length thus having cable 13 slide in the opposite direction. In this way, cable 13 drags along plate 12 which throws back carriage 4 in the opposite direction with a speed slightly lower than the arrival speed.

Clearly, the various parameters of the stop/throw-back mechanism have to be adjusted according to the moving mass and to the impact speed on the stop plates 12. Therefore, the distance between plate 12 and pulley 14, the length and elastic modulus of springs 16, and the other structural strength parameters will depend on the amount of kinetic energy to be discharged. In particular, in order to exploit always the longest possible useful stroke, an adjustment system may be provided for the position of plates 12, e.g. by means of a worm screw mechanism, according to the deformation of springs 16 required to absorb the kinetic energy. Otherwise, the position of plates 12 must be the one corresponding to the highest design speed of carriage 4, thus giving up a portion of the useful stroke at speeds lower than the highest speed.

It is also apparent that the structure, though with the proper safety margins, is intended to withstand not more than a certain impact speed of carriage 4, beyond which the adjustment system intervenes to slow it, as it will be made clear further on.

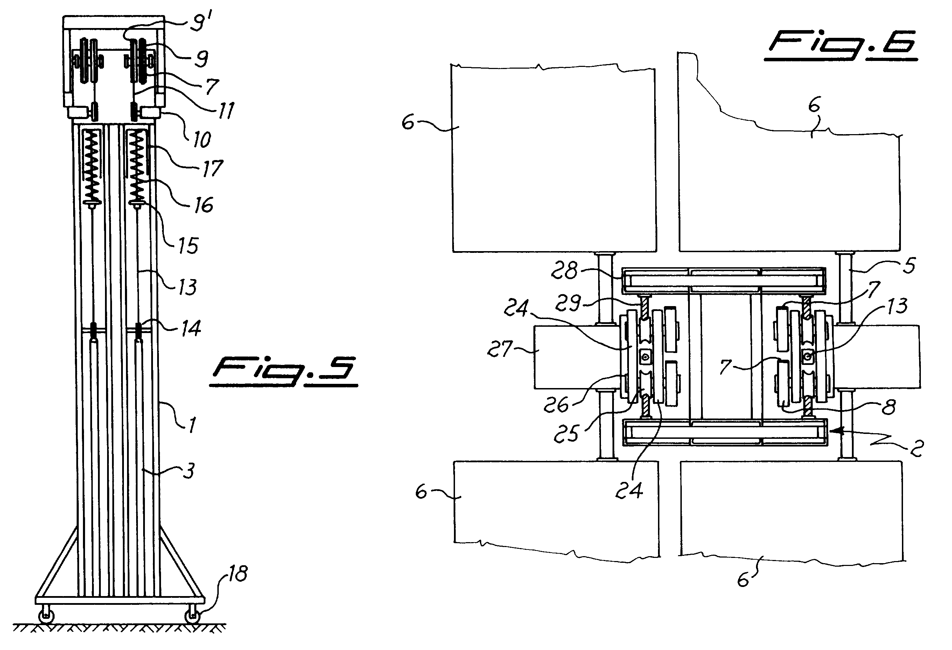

Referring also to figs.3 and 4, there is seen that the portal rests on the ground through two pairs of rollers 18 and 19, positioned at the base of uprights 1, and a rotation pivot 20, also located at the base of an upright 1, inserted in a corresponding hub 21 fixed into the ground. The rollers 19 located by pivot 20 have their rotation axis orthogonal to the portal and run on a circular pad 22, whereas rollers 18 on the other upright 1 have their rotation axis parallel to the portal and run along a guide 23.

In this way, the whole portal can be oriented on 360°, as shown in fig.3, by rotating it around pivot 20, for example by means of an electric motor or the like (not shown in the drawings) acting on rollers 18. The portal is thus arranged in the direction orthogonal to the wind with the leading edge of the wings towards it, whichever direction the wind comes from. In practice, this need is more theoretical than real, since the prevailing wind in a certain area usually has a limited variation of direction. However, the device thus allows to exploit any wind also coming from "anomalous" directions, for example due to local effects overcoming the general wind direction.

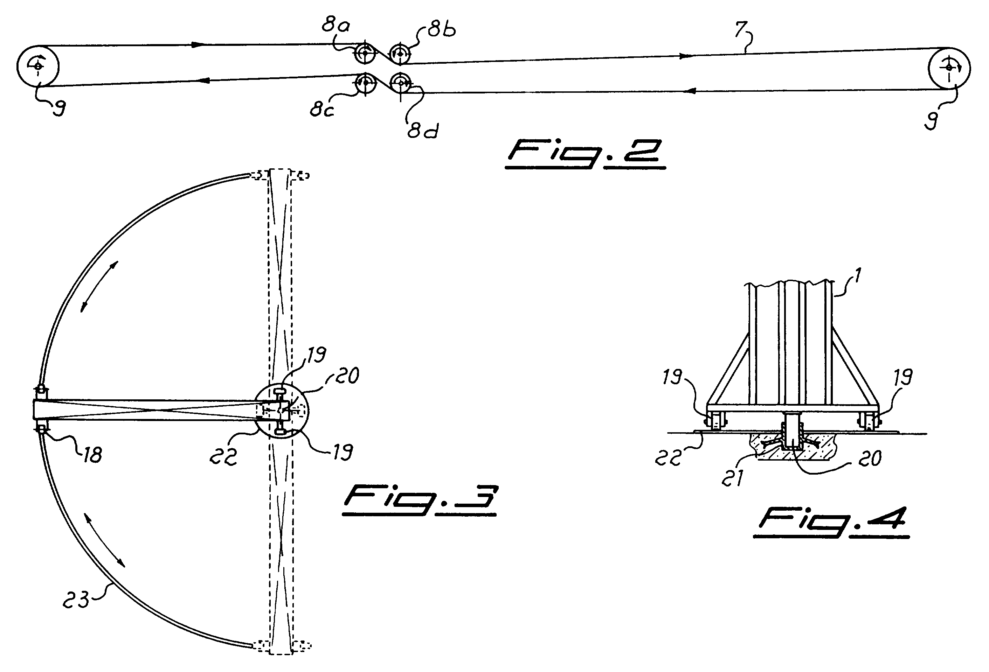

With reference to the scheme of fig.2, there is now illustrated the operation of the mechanism for transferring the motion from carriage 4 to belt 7. As mentioned above, the four driving pulleys 8 are arranged at the corners of a rectangle on carriage 4; the upper left, upper right, lower left and lower right pulleys are respectively referred to as 8a, 8b, 8c and 8d. Belt 7 rotates clockwise on the end pulleys 9, the upper length entering carriage 4 above pulley 8a, which rotates clockwise, and leaving below pulley 8b, which rotates anti-clockwise, and similarly the lower length enters carriage 4 below pulley 8d, which rotates clockwise, and leaves above pulley 8c, which rotates anti-clockwise. Therefore, the device has a symmetrical arrangement with respect to the horizontal axis connecting the centers of pulleys 9.

The four pulleys 8 include a locking mechanism which prevents their rotation in the direction opposite to that illustrated in fig.2. In this way, when carriage 4 travels rightwards with a speed lower than the speed of belt 7 all pulleys 8 rotate. In fact, the lower length of belt 7 crosses carriage 4 from right to left, with a relative speed equal to the sum of said speeds, thus favouring the rotation of pulleys 8c and 8d, while the upper length crosses carriage 4 from left to right, thus favouring the rotation of pulleys 8a and 8b, but with a speed equal to the difference between the belt and carriage speeds.

Therefore, this mechanism allows carriage 4 to rapidly accelerate under the action of the wind, since in this condition it does not transfer power to belt 7 but it only has to overcome the various frictions. The locking of the upper pulleys 8a and 8b occurs when the speed of carriage 4 equals that of belt 7, since at this moment the upper length of belt 7 tends to cross carriage 4 from right to left, i.e. in the direction opposite to the direction of rotation of said pulleys. From now on the carriage transfers to belt 7 the power it picks up from the wind along the rightwards stroke up to the stop plate 12 at the right end.

When carriage 4 is stopped and thrown back leftwards as explained above, its operation is the same thanks to the above-mentioned symmetry, the only difference being that in this direction the lower pulleys 8c and 8d grip on the lower length of belt 7.

Therefore, a structurally very simple mechanism has been obtained for transferring power, with automatic engagement and disengagement according to the relative speed between carriage 4 and belt 7. The combination of said mechanism with the above-described stop/throw-back mechanism of elastic type thus allows to minimize the acceleration run, required by the carriage after the reversal to re-engage belt 7. The useful stroke between the stop plates 12 is thus exploited to the maximum extent.

Referring to figs.5 and 6, there is seen that the device according to the present invention advantageously includes a pair of structures like the one described heretofore, symmetrically arranged with respect to the longitudinal vertical plane. This is apparent from fig.5, wherein carriages 4 are omitted while pulley 9' driving generator 10 through belt 11 is visible. This structural doubling allows to reduce the costs and bulkiness for the same installed power, since one double structure is much cheaper than two single structures and obviously requires half the room.

In the cross-section of fig.6, there is seen that each carriage 4 is made up of two vertical sides 24 with four guiding pulleys 25 therebetween, mounted on the same shaft 26 of the driving pulleys 8 located on the other face of the inner side. On the other face of the outer side there is mounted a box 27 containing the mechanism for adjusting the angle of attack of wings 6 by rotating rod 5 on which they are mounted. Wings 6 are depicted here in a position orthogonal to the portal so as to show the absence of interference between the two pairs of wings even in the position of maximum bulkiness.

The crossbeam 2 essentially consists in an I beam whose flanges 28 bear on their inner face the guides 29 on which the guiding pulleys 25 run. It is clear that the above-cited absence of interference between wings 6 depends on the combination of their chord length with the position of guides 29, i.e. the width of flanges 28 of the I beam.

It should be noted that the complete symmetry of the device allows, if desired, to reduce the arc of rotation of the portal to 180° only, thus reducing by half the area required. In fact, the portal may rotate, for example, between 0° and 180° to "chase" the wind changing from 90° to 270°. If the wind further rotates from 270° towards 360°, the portal instead of crossing the 180° and proceed towards the 270° may go back to 0° and reverse the orientation of the wings, thus returning orthogonal to the wind changing from 270° to 90°.

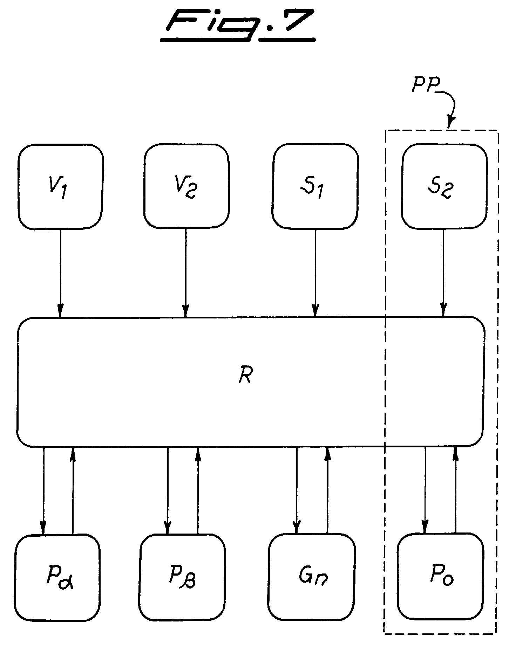

Finally referring to the scheme of fig.7, the adjustment system of the present device is now illustrated. This system essentially includes a plurality of sensors and actuators interacting with a central regulator R, all said elements being not shown in the drawings.

The orientation of the portal in the direction orthogonal to the wind, as explained above, is controlled by a primary positioning sub-system PP including a sensor S₂ which detects the direction of arrival of the wind and communicates it to regulator R so that it controls the portal rotation mechanism P_{O}.

The other sensors are an anemometer V₁ detecting the wind speed V, a tachometric dynamo V₂ detecting the speed U of the driving belt 7 and therefore of carriage 4, and a sensor S₁ detecting the direction of travel of the carriage. The other actuators are the mechanism P_{α} adjusting the inclination of wings 6, the mechanism P_{β} adjusting the inclination of the high-lift devices of wings 6, if any, and the Gₙ controller of the revolutions of the D.C. electric generator 10 acting as a brake to adjust the speed U of belt 7. Regulator R is connected to all the sensors and actuators, to the latter also through a feedback connection.

From the data of sensors V₁, V₂ and S₁ it is possible to build the "velocity triangle", i.e. to obtain the direction and intensity of the relative wind impinging on wings 6. In this way, they are oriented by means of mechanism P_{α} to the optimum angle of attack calculated by regulator R through a program loaded therein. The program is designed so as to maximize the device efficiency by optimizing the Betz power coefficient, as explained in the introduction, according to the detected operation parameters.

Mechanism P_{α} also intervenes at every reversal of carriage 4, when sensor S₁ detects that speed U has inverted its direction. Other conditions being equal, said intervention consists in taking wings 6 to a symmetrically opposite angle of attack with respect to the arrival one. In order to shorten the system reaction time, it is possible to include a mechanism which automatically carries out said reversal of the angle of attack as soon as carriage 4 touches the stop plate 12.

The control of travel speed U is effected by means of controller Gₙ which acts on the separate excitation of the stator of generator 10 so as to adjust the braking torque on the rotor, i.e. the power absorbed by the generator. If the wind reaches so high a speed that the braking action of the generator is not sufficient to keep the carriage speed U within the design values, regulator R intervenes by reducing the angle of attack of the wings up to the limit of feathering them, i.e. giving them zero angle of attack. Due to the above-cited symmetry of the device, the profiles used for the wings are preferably of the symmetrical type so that the zero-lift angle of attack will usually be the orthogonal position of maximum wing bulkiness shown in fig.6.

The use of high-lift devices adjusted by means of mechanism P_{β} allows to increase the wing lift, and therefore the picked power, with angle of attack and wind speed (V) being equal. At rather low speeds V, the use of high-lift devices is essential to extract such a power as to reach the Betz optimization, otherwise the wings would be taken to such an angle of attack as to end up in stall condition. Moreover, the inclination of the high-lift devices is a further adjustment parameter which allows a greater flexibility in controlling the other parameters, such as the angle of attack of the wings or the carriage travel speed (U). Obviously, the high-lift devices must have characteristics of symmetry similar to those of the wings on which they are mounted, whereby they are generally of the flaperon or split flap type. Also their operation is obviously symmetrical and synchronized with the reversal of the angle of attack of the wings.

The use of a pair of generators 10, each one driven by a pulley 9', instead of a single more powerful generator has the advantageous possibility of connecting them in series in order to have higher output voltage when the picked power is low, and in parallel with lower intensity of current when the power is higher. Since the device has a double structure, it would also be possible to arrange at each end a single generator 10 driven both by belt 11 moved by the front carriage and by belt 11 moved by the rear carriage, thus reducing the total number of generators from four to two. However, the structural symmetry of the device can not prevent the rear pair of wings from having wind conditions slightly different from those of the front pair exactly due to the motion of the latter. Therefore, the unification of the speed control of the two front and rear carriages by restraining them to a same pair of generators may cause adjustment problems.

It is apparent that though the generation of electric power is the most practical use for the power picked from the wind, the rotational motion of pulleys 9 may be employed also for directly driving a user such as a pump or the like.

When the sensors detect a change in the wind speed and/or direction, the adjustment system takes a certain time to adapt the device to the new operating conditions. In order to reduce the time during which the device operates in non-optimum conditions, sensors V₁ and S₂, often integrated into a single apparatus, are positioned upwind from the portal along the arrival direction of the prevailing winds. A distance of at least some meters between said sensors and the portal allows to detect and transmit the wind changes to regulator R with a certain advance with respect to the moment at which said new wind conditions reach the wings. In this way, it is possible to reduce, at least partially, the reaction lag of the adjustment system. In wind power exploitation plants including a plurality of portals it is obviously advantageous to connect said pair of sensors V₁ and S₂ to a group of portals, instead of providing each single portal with an own pair of sensors. If the wind direction changes significantly and quite frequently, it may suitable to provide four pairs of sensors arranged as a square so as to use always the data of the pair which is upwind from the group of portals.

In order to adapt the present device to exploiting hydraulic flows it is sufficient to greatly simplify it by removing all the members which are not required in said type of application. In particular, since the hydraulic flow has practically constant direction and speed, the adjustment system can be removed. It is replaced by manual adjustment systems for the angle of attack and the number of revolutions of the generators, through which an intervention will be required only in case of significant flow rate changes. The portal may be provided with floats or fixed to the bottom, and the carriage is provided with a single lower wing which is the only portion of the device, together with the uprights 1 if any, to be immersed in water. In the absence of uprights 1, springs 16 are horizontally positioned at the ends of crossbeam 2, and cable 13 may also not be a loop but just extending between the two springs.

It is clear that the above-described and illustrated embodiment of the present device is just an example susceptible of a number of changes, in particular as far as the structural details of the portal are concerned. Similarly, springs 16 may be replaced by equivalent elastic members and/or they may be differently positioned, as mentioned above for water use.

## Claims

1. A device for exploiting wind power including members picking up said power which consist in untwisted wings (6) mounted on a carriage (4) which travels with reciprocating translational motion along a guiding and supporting structure (2) while driving a member (7) for transferring the power picked from the wind, the angle of attack of said wings (6) with respect to the carriage (4) and the orientation of said guiding structure (2) being adjustable according to the wind conditions, characterized in that said member (7) is flexible and in that the device includes a mechanism for the automatic engagement and disengagement of the carriage (4) to the flexible member (7) depending on the relative speed between the carriage (4) and the flexible member (7).

2. A device according to claim 1, characterized in that the guiding structure (2) of the carriage (4) is horizontal and provided at the ends with mechanisms (12, 13) for stopping and throwing back the latter, said mechanisms including elastic members (16) for absorbing and returning the kinetic energy of the carriage/wings assembly.

3. A device according to claim 1 or 2, characterized in that the wings (6) are provided with high-lift devices, the inclination thereof being adjusted contemporaneously with the angle of attack of the wings (6).

4. A device according to one or more of claims 1 to 3, characterized in that it includes an automatic adjustment device comprising wind speed and direction sensors (V₁, S₂), a sensor (V₂) for the speed of the carriage (4), a sensor (S₁) for the direction of travel of the carriage (4), a mechanism (P_{α}) for changing the angle of attack of the wings (6), a mechanism (P_{β}) for changing the inclination of the high-lift devices, a mechanism (P_{O}) for changing the orientation of the guide of the carriage (4), a mechanism (Gₙ) for controlling the speed of the carriage (4), and a central regulator (R), to which said sensors and said mechanisms are connected, provided with a memory containing a program for optimizing the device operation.

5. A device according to one or more of claims 1 to 4, characterized in that the flexible member (7) drives one or more D.C. electric generators (10), said generators being alternatively connectable in series or in parallel.

6. A device according to claim 5, characterized in that the control of the speed of the carriage (4) is carried out by acting on the separate excitation of the stator of each generator (10) so as to adjust the braking torque on the rotor thereof.

7. A device according to one or more of claims 1 to 6, characterized in that the carriage (4) engages the flexible member (7) by means of four pulleys (8) arranged at the corners of a rectangle, of which two along a diagonal can only rotate clockwise and the other two only anti-clockwise, said flexible member (7) running between the upper and lower pairs of said pulleys (8) in the direction concordant with their direction of rotation.

8. A device according to claim 4, characterized in that the wind speed and direction sensors (V₁, S₂) are positioned upwind from the structure (2), at least some meters away along the arrival direction of the prevailing winds.

9. A device according to one or more of claims 1 to 8, characterized in that it includes a double structure symmetrical with respect to the longitudinal vertical plane.

10. A device for exploiting hydraulic power according to one or more of claims 1 to 9, characterized in that the guiding structure (2) is provided with floats for its positioning in water.

## Patentansprüche

1. Vorrichtung zur Ausnutzung der Windenergie, die Elemente zur Entnahme der genannten Energie aufweist, die aus unverwundenen Flügeln (6) bestehen und auf einem Wagen (4) angebracht sind, der mit translatorischen Hin- und Herbewegung längs einer Führungs- und Stützstruktur (2) läuft und ein Element (7) zur Übertragung der vom Wind entnommenen Energie mitnimmt, wobei der Anstellwinkel der genannten Flügel (6) gegenüber dem Wagen (4) und die Richtung der gennanten Führungsstruktur (2) je nach den Windbedingungen eingestellt werden können, dadurch gekennzeichnet, daß das genannte Element (7) flexibel ist und daß die Vorrichtung eine Einrichtung zum automatischen Ein-und Auslösen des Wagens an das flexible Element (7) je nach der relativen Geschwindigkeit zwischen dem Wagen (4) und dem flexiblen Element (7) aufweist.

2. Vorrichtung nach Anspruch 1, dadurch gekennzeichnet, daß die Führungsstruktur (2) des Wagens (4) waagerecht ist und an ihren Enden Halte- und Schiebeeinrichtungen (12, 13) aufweist, die elastische Elemente (16) zur Aufnahme und Rückgabe der kinetischen Energie der Wagen/Flügelanordnung enthält.

3. Vorrichtung nach Anspruch 1 oder 2, dadurch gekennzeichnet, daß die Flügel (6) mit Klappen versehen sind, deren Neigung gleichzeitig mit dem Anstellwinkel der Flügel (6) eingestellt wird.

4. Vorrichtung nach einem oder mehreren der Ansprüche 1 bis 3, dadurch gekennzeichnet, daß sie eine automatische Einstelleinrichtung aufweist, die Windgeschwindigkeits- und Windrichtungssensoren (V₁, S₂), einen Sensor (V2) für die Geschwindigkeit des Wagens (4), einen Sensor (S1) für die Bewegungsrichtung des Wagens (4), eine Einrichtung (P_{α}) zur Änderung des Anstellwinkels der Flügel (6), eine Einrichtung (P_{β}) zur Änderung der Klappenneigung, eine Einrichtung (P_{O}) zur Änderung der Neigung der Führung des Wagens (4), eine Einrichtung (Gₙ) zur Kontrolle der Geschwindigkeit des Wagens (4), und einen Zentralregler enthält, an den die genannten Sensoren und die genannten Einrichtungen angeschlossen sind und der mit einem Speicher versehen ist, der ein Programm zur Optimierung des Vorrichtungsbetriebs enthält.

5. Vorrichtung nach einem oder mehreren der Ansprüche 1 bis 4, dadurch gekennzeichnet, daß das flexible Element (7) einen oder mehrere Gleichstromgeneratoren (10) antreibt, die abwechselnd parallel oder in Reihe geschaltet werden können.

6. Vorrichtung nach Anspruch 5, dadurch gekennzeichnet, daß die Kontrolle der Geschwindigkeit des Wagens (4) dadurch durchgefürt wird, daß man auf die unabhängige Erregung des Stators jedes Generators (10) so wirkt, daß das Bremsdrehmoment auf dem Läufer desselben eingestellt wird.

7. Vorrichtung nach einem oder mehreren der Ansprüche 1 bis 6, dadurch gekennzeichnet, daß der Wagen (4) das flexible Element (7) durch vier an den Ecken eines Rechtecks angeordnete Riemenscheiben (8) einlöst, von denen zwei eine Diagonale entlang nur im Uhrzeigersinn und die anderen zwei nur im Gegenuhrzeigersinn drehen können, wobei das genannte flexible Element (7) zwischen dem oberen und dem unteren Paar der genannten Riemenscheiben (8) in ihre Drehrichtung läuft.

8. Vorrichtung nach Anspruch 4, dadurch gekennzeichnet, daß die Windgeschwindigkeits- und Richtungssensoren (V₁, S₂) am Wind gegenüber der Struktur (2) mindestens einige Meter entfernt der Herkunftsrichtung der überwiegenden Winde entlang liegen.

9. Vorrichtung nach einem oder mehreren der Ansprüche 1 bis 8, dadurch gekennzeichnet, daß sie eine Doppelstruktur aufweist, die gegenüber der senkrechten längserstreckten Ebene symmetrisch ist.

10. Vorrichtung zur Ausnutzung der Windenergie nach einem oder mehreren der Ansprüche 1 bis 9, dadurch gekennzeichnet, daß die Führungsstruktur (2) mit Schwimmern zum Wasserpositionieren versehen ist.

## Revendications

1. Dispositif d'exploitation de l'énergie éolienne, comprenant des éléments captant ladite énergie qui sont constitués de pales non vrillées (6) montées sur un chariot (4) qui se déplace suivant un mouvement de translation dans un sens et dans l'autre le long d'une structure de guidage et de support (2), tout en entraînant un élément (7) servant à transmettre l'énergie prélevée sur le vent, l'angle d'attaque des pales (6) par rapport au chariot (4) et l'orientation de la structure de guidage (2) étant réglables en fonction des conditions du vent, caractérisé en ce que ledit élément (7) est flexible et en ce que le dispositif comprend un mécanisme pour la mise en prise et hors de prise automatique du chariot (4) par rapport à l'élément flexible (7) en fonction de la vitesse relative entre le chariot (4) et l'élément flexible (7).

2. Dispositif selon la revendication 1, caractérisé en ce que la structure de guidage (2) du chariot (4) est horizontale et est pourvue, à ses extrémités, de mécanismes (12, 13) servant à l'arrêter et le renvoyer, ces mécanismes comportant des éléments élastiques (16) pour absorber et restituer l'énergie cinétique de l'ensemble chariot/pales.

3. Dispositif selon la revendication 1 ou 2, caractérisé en ce que les pales (6) sont pourvues de dispositifs de portance élevée, l'inclination de ceux-ci étant réglée en même temps que l'angle d'attaque des pales (6).

4. Dispositif selon une ou plusieurs des revendications 1 à 3, caractérisé en ce qu'il comprend un dispositif de réglage automatique comprenant des capteurs de vitesse et direction du vent (V₁, S₂), un capteur (V₂) pour la vitesse du chariot (4), un capteur (S₁) pour la direction de déplacement du chariot (4), un mécanisme (P_{α}) servant à faire varier l'angle d'attaque des pales (6), un mécanisme (P_{β}) servant à faire varier l'inclinaison des dispositifs de portance élevée, un mécanisme (Pₒ) servant à faire varier l'orientation du guide du chariot (4), un mécanisme (Gₙ) servant à commander la vitesse du chariot (4), et un régulateur central (R) auquel lesdits capteurs et lesdits mécanismes sont connectés et qui est pourvu d'une mémoire contenant un programme servant à rendre optimal le fonctionnement du dispositif.

5. Dispositif selon une ou plusieurs des revendications 1 à 4, caractérisé en ce que l'élément flexible (7) entraîne un ou plusieurs générateurs électriques (10) à courant continu, ces générateurs pouvant être connectés alternativement en série ou en parallèle.

6. Dispositif selon la revendication 5, caractérisé en ce que la commande de la vitesse du chariot (4) est effectuée en agissant sur l'excitation séparée du stator de chaque générateur (10) de manière à ajuster le couple de freinage sur son rotor.

7. Dispositif selon une ou plusieurs des revendications 1 à 6, caractérisé en ce que le chariot (4) vient en prise sur l'élément flexible (7) au moyen de quatre poulies (8) disposées aux angles d'un rectangle, deux d'entre elles situées suivant une diagonale pouvant tourner uniquement dans le sens horaire et les deux autres uniquement dans le sens antihoraire, l'élément flexible (7) passant entre les poulies (8) de la paire supérieure et entre les poulies (8) de la paire inférieure dans le sens correspondant à leur sens de rotation.

8. Dispositif selon la revendication 4, caractérisé en ce que les capteurs de vitesse et de direction de vent (V₁, S₂) sont placés en une position située au vent par rapport à la structure (2), au moins à quelques mètres de distance suivant la direction d'arrivée des vents dominants.

9. Dispositif selon une ou plusieurs des revendications 1 à 8, caractérisé en ce qu'il comprend une structure double symétrique par rapport au plan vertical longitudinal.

10. Dispositif d'exploitation de l'énergie hydraulique suivant une ou plusieurs des revendications 1 à 9, caractérisé en ce que la structure de guidage (2) est pourvue de flotteurs servant à son positionnement dans l'eau.
